# EUROPEAN PATENT APPLICATION

(11) **EP 2 014 633 A1**
(43) Date of publication of application: **14.01.2009**
(21) Application number: 07013809.4
(22) Date of filing: 13.07.2007
(51) Int. Cl.: C07B 49/00, C07C 29/147, C07D 215/18, C07C 31/135, C07C 31/12

(54) **Process for the production of tertiary alcohols**

(71) Applicant: Lonza AG, 4052 Basel (CH)
(72) Inventor: McGarrity, John, 3902 Brig-Glis (CH); Djojo, Francis, 3930 Visp (CH)

(57) **Abstract**

Tertiary alcohols are prepared by reacting carboxylic esters with Grignard reagents in ethereal solvents in the presence of lanthanum trichloride and lithium chloride.

The method is particularly suitable for the production of (α*S*)-α-[3-[(1*E*)-2-(7-chloro-2-quinolinyl)ethenyl]phenyl]-2-(1-hydroxy-1-methylethyl)benzenepropanol of formula 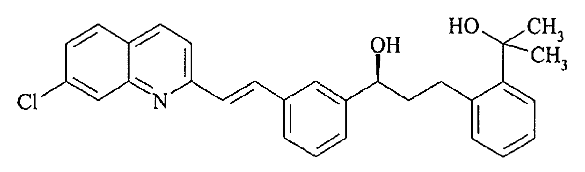 which is an intermediate in the production of montelukast.

## Description

The invention relates to a process for the production of tertiary alcohol of formula 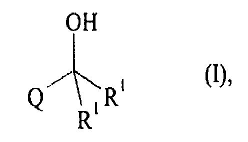 wherein R¹ is C₁₋₄ alkyl and Q is C₁₋₁₀ alkyl, C₂₋₁₀ alkenyl, C₃₋₈ cycloalkyl, aryl or heteroaryl or an organic moiety composed of any two or more of the beforementioned, each C₁₋₁₀ alkyl, C₂₋₁₀ alkenyl, C₃₋₈ cycloalkyl, aryl and heteroaryl optionally being substituted with one or more substituents independently selected from the group consisting of hydroxy, fluorine, chlorine, amino, C₁₋₄ alkylamino and di(C₁₋₄ alkyl)amino.

Tertiary alcohols having two lower alkyl groups at the carbinol carbon are valuable intermediates in the syntheses of several pharmaceutically active compounds. For example, (a*S*)-α-[3-[(1*E*)-2-(7-chloro-2-quinolinyl)ethenyl]phenyl]-2-(1-hydroxy-1-methylethyl)-benzenepropanol of formula 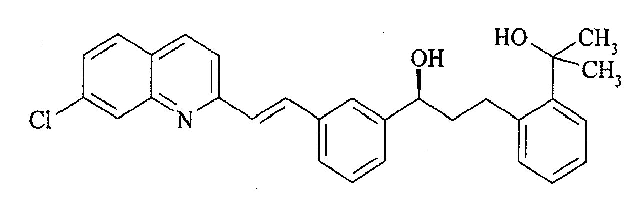 is a key intermediate in the synthesis of the pharmaceutically active compound known as montelukast (1-[[[(1*R*)-1-[3-[(1*E*)-2-(7-chloro-2-quinolinyl)ethenyl]phenyl]-3-[2-(1-hydroxy-1-methylethyl)phenyl]propyl]thio]methyl]cyclopropaneacetic acid).

A well known synthesis of tertiary alcohols is the reaction of carboxylic esters with two equivalents of a Grignard reagent. However, the yields are often not satisfactory as undesired reactions compete with the formation of the alcohol and result in the formation of byproducts, in particular when an alkylmagnesium chloride is used as Grignard reagent. It has recently been found that "nearly anhydrous" activated cerium trichloride has a beneficial effect on the above reaction, which has been postulated to be due to suppression of the enolization of the ketone intermediate (D. A. Conlon et al., Adv. Synth. Catal.2004, 346, 1307-1315). The water content and activation method of the cerium trichloride as well as its crystal habit have been found to be critical. Moreover, the activation of the cerium chloride is somewhat tedious and the activated cerium chloride is sparingly soluble in ethereal solvents such as tetrahydrofuran which results in a heterogeneous reaction mixture. In the preparation of the above montelukast intermediate the starting material (which is available as a monohydrate) has first to be carefully dried (e.g. by azeotropic distillation), but nevertheless, about 5 equivalents of methylmagnesium chloride are required, instead of the theoretical amount of equivalents (WO 95/18107 A1).

It is an object of the present invention to provide an improved method for the preparation of tertiary alcohols from carboxylic esters and Grignard reagents which gives high yields of the desired product even if the chloride form of the Grignard reagent is used and even if the starting material is used in its hydrate form. The method should not involve tedious activation steps, heterogeneous reaction mixtures and cumbersome work-up procedures.

Applicants have found that tertiary alcohols of formula 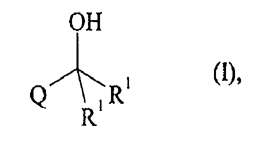 wherein R¹ is C₁₋₄ alkyl and Q is C₁₋₁₀ alkyl, C₂₋₁₀ alkenyl, C₃₋₈ cycloalkyl, aryl or heteroaryl or an organic moiety composed of any two or more of the beforementioned, each C₁₋₁₀ alkyl, C₂₋₁₀ alkenyl, C₃₋₈ cycloalkyl, aryl and heterocyclyl, optionally being substituted with one or more substituents independently selected from the group consisting of hydroxy, fluorine, chlorine, amino, C₁₋₄ alkylamino and di(C₁₋₄ alkyl)amino can be prepared by reacting a carboxylic ester of formula 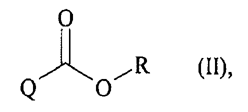 wherein R is C₁₋₁₀ alkyl, aryl or arylalkyl,
with a Grignard reagent of formula

R¹MgX (III),

wherein R¹ is as defined above and X is chlorine, bromine or iodine,
in an ethereal solvent in the presence of lanthanum trichloride and lithium chloride.

Here and hereinbelow, the term "C_{1-*n*} alkyl" is to be understood to comprise any linear or branched alkyl group having from 1 to *n* carbon atoms. For example, the term "C₁₋₄ alkyl" comprises methyl, ethyl, propyl, isopropyl, butyl, isobutyl, *sec*-butyl and *tert*-butyl. In addition to the beforementioned, the term "C₁₋₁₀ alkyl" comprises groups such as pentyl, isopentyl, neopentyl, hexyl, isohexyl, heptyl, octyl, nonyl, decyl and the like.
The term "C₂₋₁₀ alkenyl" comprises any linear or branched hydrocarbyl group having from 2 to 10 carbon atoms and at least one carbon-carbon double bond.

The term "C₃₋₈ cycloalkyl" is to be understood to comprise any mono- or bicyclic cycloaliphatic group having from 3 to 8 carbon atoms, such as cyclopropyl, cyclobutyl, cyclopentyl, cyclohexyl, cycloheptyl, cyclooctyl, norbornyl, norcaryl and the like.
The term "aryl" is to be understood to comprise any mono-, bi- or polycarbocyclic group comprising at least one aromatic ring, such as phenyl, naphthyl, anthracenyl, phenanthryl, biphenylyl, fluorenyl, tetrahydronaphthalenyl and the like. A preferred meaning of "aryl" is phenyl.
The term "heterocyclyl" comprises any aromatic and non-aromatic heterocyclic groups, such as tetrahydropyranyl, tetrahydrofuranyl, piperidinyl, pyrrolidinyl, morpholinyl, pyranyl, furanyl, thiophenyl, pyrrolyl, pyridyl, pyrazinyl, pyrimidinyl, oxazolyl, thiazolyl, indolyl, quinolinyl, carbazolyl and the like. Preferred meanings of "heterocyclyl" are pyridyl and quinolinyl.
The expression "organic moiety composed of any two or more of the beforementioned" is to be understood to mean any organic moiety having one free (open) valency that comprises two or more of the beforementioned groups, for example arylalkyl or alkylaryl, (arylalkyl)aryl, (aryl-alkenyl)aryl, [(alkenylaryl)alkyl]aryl, [[(heterocyclylalkenyl)aryl]alkyl]aryl and the like.
Each C₁₋₁₀ alkyl, C₂₋₁₀ alkenyl, C₃₋₈ cycloalkyl, aryl and heteroaryl occurring alone or as a component of an organic moiety composed of two or more of these groups, as described above, may independently be substituted with one or more substituents selected from the group consisting of hydroxy, fluorine and chlorine.

The term "ethereal solvent" is to be understood to mean any solvent or solvent mixture comprising a substantial amount of an acyclic or cyclic ether that is liquid at the reaction temperature, such as diethyl ether, dibutyl ether, methyl *tert*-butyl ether, dimethoxyethane, tetrahydrofuran (THF), dioxane and the like.

The lithium chloride solubilizes the lanthanum trichloride, resulting in a true solution of the two salts in the ethereal solvent and thus in a homogeneous reaction mixture. In a preferred embodiment, lanthanum trichloride and lithium chloride are present in a molar ratio of 1:2 or less. A THF solution of LaCl₃ and LiCl in a molar ratio of 1:2 is commercially available from Chemetall GmbH, Frankfurt (Main), Germany.

The alkyl group R¹ of the Grignard reagent III is preferably methyl.

The halogen component X of the Grignard reagent III is preferably chlorine.

In a preferred embodiment, the organic moiety Q of the tertiary alcohol I and the carboxylic ester II comprises at least one aryl group. More preferably, the carboxylate group of the carboxylic ester II is directly bound to an aryl group.

In a still more preferred embodiment, Q is the group of formula 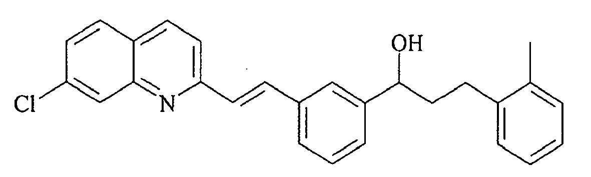 and the carboxylic ester II is 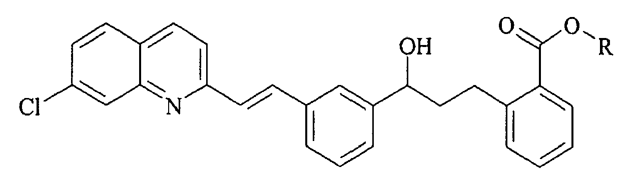 wherein R is as defined above,
to yield the tertiary alcohol I of formula

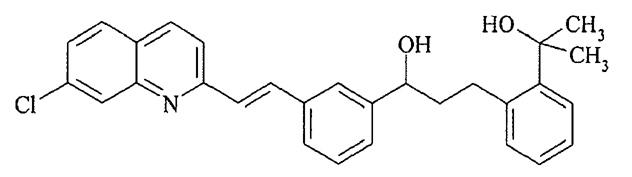

Most preferably, the secondary alcohol groups of the above structures have S-configuration to make them suitable as intermediates in the synthesis of (*R*)-montelukast.

In an especially preferred embodiment, the preferred carboxylic ester depicted above is used in the monohydrate form, thus rendering a separate drying step superfluous. The water of crystallization reacts with one equivalent of the Grignard reagent to yield the corresponding alkane and magnesium hydroxyhalide.

The starting carboxylic ester II is preferably a methyl ester.

The ethereal solvent used in the process of the invention is preferably tetrahydrofuran alone or a mixture of tetrahydrofuran and an inert solvent such as an aliphatic or aromatic hydrocarbon.

The reaction temperature can be in the range that is commonly employed in Grignard reactions, it is preferably between -20°C and room temperature, more preferably from -10°C to +10°C.

The work-up of the reaction mixture can be accomplished according to the methods commonly used in the art, e.g. by quenching with water or weak aqueous acids and extracting the product with a suitable solvent.

The following non-limiting examples will illustrate the process of the invention.

### Example 1

### (aS)-α-[3-[(1E)-2-(7-chloro-2-quinolinyl)ethenyl]phenyl]-2-(1-hydroxy-1-methylethyl)-benzenepropanol

In a 50 mL three necked flask equipped with magnetic stirrer, a solution of lanthanum trichloride and lithium chloride (molar ratio 1:2) in THF (3.09 g of a 16 wt.% solution, 2.00 mmol) was diluted with THF (6.0 mL). Methyl 2-[(3*S*)-3-[3-[(1*E*)-2-(7-chloro-2-quinolinyl)ethenyl]-phenyl]-3-hydroxypropyl]benzoate monohydrate (0.916 g, 2.00 mmol; prepared according to EP 0 480 717 A1, Example 146, Step 2) was added, and after 1 h stirring at room temperature under nitrogen the mixture was cooled to -5°C. Methylmagnesium chloride (3 M solution in THF, 3.4 mL, 10 mmol) was added dropwise while the temperature was not allowed to exceed -5°C. The mixture was then stirred at 0 °C for 12 h and after warming to room temperature saturated aqueous ammonium chloride solution (10 mL) was added at such a rate as to maintain the temperature below 25°C. Water (10 mL) and Toluene (20 mL) were added and the resulting suspension was filtered through a sintered glass filter. The phases were separated and the aqueous phase was extracted with toluene (20 mL) and discarded. The combined organic phases were washed with water (5 mL) and evaporated *in vacuo* (50 mbar, 40°C) to leave a residue of 3.1 g. The residue was triturated at 50°C with heptane (3 mL) and then cooled to 20 °C during 3 h. The precipitated product was isolated by filtration at 20 °C, washed first with heptane/tolu-ene (1:1 v/v, 4 mL), then with heptane (4 mL), and finally dried at 40 °C to yield 0.63 g of the desired product.
¹H NMR (DMSO-d₆, 500 MHz): δ = 1.51 (s, 3H); 1.52 (s, 3H); 2.00 (m, 2H), 2.96 (m, 1H); 3.10 (m, 1H); 4.72 (m, 1H); 4.94 (s, 1H); 5.36 (d, *J* = 4.4 Hz, 1H); 7.09 (t, *J* = 7.6 Hz, 1H); 7.14 (t, *J* = 7.8 Hz, 1H); 7.18 (d, *J* = 6.4 Hz, 1H); 7.41 (m, 2H); 7.44 (d, *J* = 7.9 Hz, 1H); 7.49 (d, *J* = 16.6 Hz, 1H); 7.56 (dd, *J* = 8.3, 2.2 Hz, 1H); 7.62 (d, *J* = 6.8 Hz, 1H); 7.77 (bs, 1H); 7.91 (d,*J* = 16.6 Hz, 1H); 7.92 (d, *J* = 8.7 Hz, 1H); 7.99 (d, *J* = 8.8 Hz, 1H); 8.03 (d, *J* = 2.0 Hz, 1H); 8.38 (d, *J* = 8.4 Hz, 1H).
¹³C NMR (DMSO-d6, 126 MHz): δ = 29.82, 31.55, 31.57, 42.34, 71.60, 72.31, 120.24, 124.73, 124.88, 125.24,125.51,125.71,126.22,126.54,127.16,128.04,128.49,129.65,130.82, 134.23, 135.20, 135.67, 136.43, 140.25, 146.66, 146.93, 147.99, 156.78.

### Examples 2-4

The procedure of Example 1 was repeated using different amounts of lanthanum trichloride (0.5, 1.0 and 1.5 molar equivalents) and 10 molar equivalents of methylmagnesium chloride (instead of 5 molar equivalents). The yield of the desired product was determined by HPLC.
The observed yields were as follows:
0.5 equivalents LaCl₃: 88.3%
1.0 equivalents LaCl₃: 94.9%
1.5 equivalents LaCl₃: 98.5%

## Claims

1. A process for the production of tertiary alcohols of formula 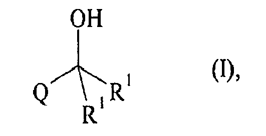 wherein R¹ is C₁₋₄ alkyl and Q is C₁₋₁₀ alkyl, C₂₋₁₀ alkenyl, C₃₋₈ cycloalkyl, aryl or heteroaryl or an organic moiety composed of any two or more of the beforementioned, each C₁₋₁₀ alkyl, C₂₋₁₀ alkenyl, C₃₋₈ cycloalkyl, aryl and heteroaryl, optionally being substituted with one or more substituents independently selected from the group consisting of hydroxy, fluorine, chlorine, amino, C₁₋₄ alkylamino and di(C₁₋₄ alkyl)amino, by reacting a carboxylic ester of formula 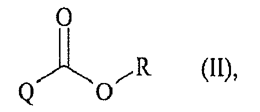 wherein R is C₁₋₁₀ alkyl, aryl or arylalkyl,
with a Grignard reagent of formula
R¹MgX (III),
wherein R¹ is as defined above and X is chlorine, bromine or iodine,
in an ethereal solvent in the presence of lanthanum trichloride and lithium chloride.

2. The process of claim 1, wherein lanthanum trichloride and lithium chloride are present in a molar ratio of 1:2.

3. The process of claim 1 or 2, wherein R¹ is methyl.

4. The process of any of claims 1 to 3, wherein X is chlorine.

5. The process of any of claim 1 to 4, wherein Q comprises an aryl group.

6. The process of claims 4 and 5, wherein Q is the group of formula 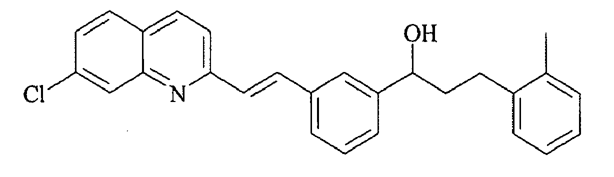 and the carboxylic ester II is 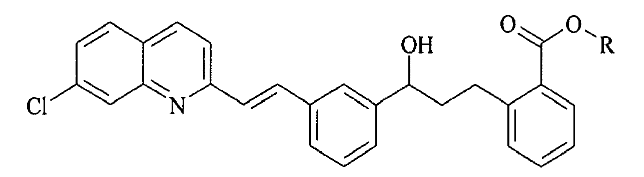 wherein R is as defined in claim 1,
to yield the tertiary alcohol I of formula

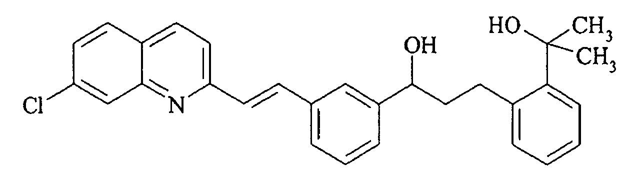

7. The process of claim 6, wherein the secondary alcohol group in Q has S-configuration.

8. The process of claims 6 or 7, wherein the carboxylic ester is used in the monohydrate form.

9. The process of any of claims 1 to 8, wherein R is methyl.

10. The process of any of claims 1 to 9, wherein the ethereal solvent is tetrahydrofuran or a mixture of tetrahydrofuran and an inert solvent.
